# EUROPEAN PATENT APPLICATION

(11) **EP 2 068 535 A1**
(43) Date of publication of application: **10.06.2009**
(21) Application number: 06810797.8
(22) Date of filing: 28.09.2006
(51) Int. Cl.: H04M 1/00, G06F 21/20, G06F 21/24, G06K 17/00, H04Q 7/38

(54) **PORTABLE TELEPHONE AND ACCESS CONTROL METHOD**

(71) Applicant: Panasonic Corporation, Kadoma-shi Osaka 571-8501 (JP)
(72) Inventor: ANZAI, Jun, Osaka 540-6207 (JP)
(74) Representative: Grünecker, Kinkeldey, Stockmair & Schwanhäusser Anwaltssozietät
(86) International application number: PCT/JP2006/319350
(87) International publication number: WO 2008/038379

(57) **Abstract**

A portable telephone is provided for making it possible for the portable telephone to associate terminal devices with each other for flexible access control less expensively and safely by means of the existing infrastructure and the terminal devices. The portable telephone (PT) is comprised of a short distance wireless communication unit (210) to carry out wireless communication with a key terminal device (KT), an ID associatingunit for associating an ID for the key terminal device (KT) with an ID for a service terminal device (ST), a PP and access table memory unit (240) for storing an access table made out by the ID associating unit, a judging unit (230) for judging whether or not the ID for the service terminal device (ST) associated with the key terminal device (KT) exists in the access table when the ID for the key terminal device (KT) is input, and a control unit (280) for controlling the short distance wireless communication (210) to transmit the held ID to the associated service terminal device (ST) in the case that the judging unit (230) judges that the ID exists in the access table.

## Description

### Technical Field

The present invention relates to a mobile phone and access control method of a communication system that performs owner authentication for a device by means of a personal wireless device.

### Background Art

In recent years, owner authentication (owner checking) for a device by means of a personal wireless device has become popular as a countermeasure to theft, illegal use, or loss of an automobile, notebook PC, mobile phone, portable HDD, or suchlike device.

At present, standardization is being promoted for this kind of owner authentication by means of a personal wireless device by the SPC (Secure Private Cosm) Forum.

SPC is a concept of a secure space in which it is possible for a device subject to control that is within a fixed distance from an individual having a key to operate, and in concrete terms, is a "technology that performs constant authentication using interactive radio communication between objects forming a pair, and makes possible function control according to the distance between objects forming a pair."

This SPC technology can be expected to be used as a preventive measure against theft, illegal use, loss, or the like of vehicles, homes, safes, TVs, PCs, PDAs, cabinets, cards, and so forth.

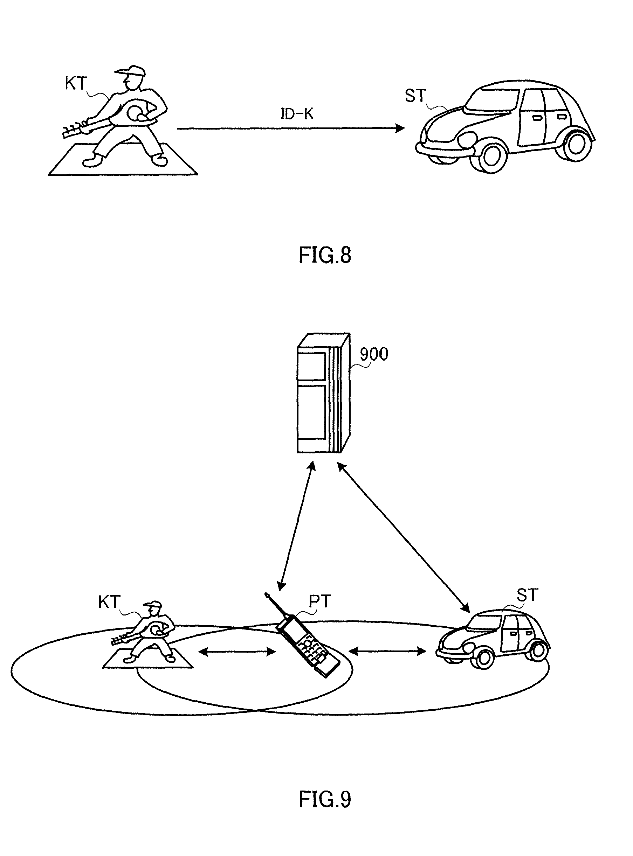

With SPC technology, for example, an owner's key terminal KT and a service terminal ST (automobile) that is a device subject to control are made a pair, as shown in FIG. 8. Then service terminal ST is activated only when the pair of terminals comprising key terminal KT and service terminal ST are within a predetermined distance. In this case, there is a space around a person in which a device subject to control is activated by means of key terminal KT, and this space moves when that person moves. This is the concept designated SPC.

In a communication system in which key terminal KT (the owner's key) and service terminal ST (an automobile) are present, as shown in FIG. 8, theft, illegal use, or loss of the automobile can be prevented by releasing a function restriction on the automobile only within a radio communication range in which mutual authentication is possible between the owner's key and the automobile.

That is to say, key terminal KT constantly transmits a specific ID (identifier) ID-K to service terminal ST (the automobile) that is the device subject to control.

While receiving ID-K transmitted from key terminal KT - that is, while in an area in which reception of ID-K transmitted from key terminal KT is possible - the automobile that is service terminal ST has function restrictions such as door locking or engine locking released and is in a usable state.

Then, when the automobile that is service terminal ST leaves a reception area for ID-K transmitted from key terminal KT, a function such as door locking or engine locking operates, and the automobile enters an unusable state.

Thus, in access control in a communication system that performs owner authentication by means of a personal wireless device, theft, illegal use, or loss of an the automobile that is service terminal ST is prevented by controlling the doors or engine of that automobile according to the distance between the owner' s key terminal KT and service terminal ST.

Currently known technologies based on this kind of SPC concept include "device use restricting apparatuses" described in Patent Document 1 and Patent Document 2, and a "communication system" described in Patent Document 3.

The "device use restricting apparatus" described in Patent Document 1 implements a device use restriction according to a fixed condition in order to prevent use of a device by a non-owner or a person other than an administrator.

This "device use restricting apparatus" is equipped with a transmitting apparatus and a receiving apparatus, and the transmitting apparatus transmits an unique code at a fixed strength. The receiving apparatus is installed in a device, and stops operation of the device if unable to receive a transmission code from the transmitting apparatus. Thus, with this "device use restricting apparatus", two terminals continually send IDs to each other at a fixed strength, and perform function stoppage if the reception strength degrades.

The "device use restricting apparatus" described in Patent Document 2 notifies a user of function stoppage as an addition to the technology of Patent Document 1. That is to say, this "device use restricting apparatus" stops device operation and also issues a warning signal if unable to receive a transmission code from the transmitting apparatus.

The "communication system" described in Patent Document 3 determines the position of a terminal that is accessible only within a predetermined area, and performs access control (by means of a wireless LAN) according to the position of the terminal. With this "communication system", an access area can be set to any range, and does not depend on the installation location of a server that performs access authentication.

This kind of system can also perform owner checking in the same way for a relationship between an automobile and a key, a key and the front door of a house, and so forth.
Patent Document 1: Japanese Patent Application Laid-Open No.HEI 9-233542
Patent Document 2: Japanese Patent Publication No.2931276
Patent Document 3: Japanese Patent Application Laid-Open No.2003-244884

### Disclosure of Invention

### Problems to be Solved by the Invention

A communication system will be assumed, as shown in FIG. 9, for example, in which a mobile phone is a personal authentication device (personal terminal PT), and is in a central position between a wearable key unit (key terminal KT) and an automobile that is a device subject to control (service terminal ST).

In access control based on the SPC concept, the mobile phone (personal terminal PT) and wearable key unit (key terminal KT), and the mobile phone (personal terminal PT) and automobile (service terminal ST), each form a pair, and authentication is performed only between the respective pairs.

Also, in access control based on the SPC concept, mutual authentication is not possible unless the IDs of the terminals are registered beforehand.

Therefore, when access control is performed in a communication system in which personal terminal PT is in a central position between key terminal KT and service terminal ST, as described above, installation of an ID management center and pairing apparatus 900 as new authentication infrastructure becomes necessary in order to manage the authentication IDs of the terminals, which is expensive.

Without such authentication infrastructure comprising an ID management center and pairing apparatus 900, only limited utilization would be possible, with key terminal KT registered and used in a personal mobile phone (personal terminal PT) and automobile (service terminal ST), for example.

Also, with a conventional access control method, two authentications - between key terminal KT and a mobile phone (personal terminal PT), and between a mobile phone (personal terminal PT) and an automobile (service terminal ST) that is a device subject to control - are independent, and the mutual relationship between key terminal KT and the automobile (service terminal ST) has not been considered.

Consequently, with a conventional access control method, when service terminal ST is an automobile, for example, it is not possible to perform control such that a door of the automobile can be opened by means of key terminal KT possessed by a child, but the engine cannot be started.

Also, with a conventional access control method, when service terminal ST is the front door of a house, it is not possible to perform control such that only the owner of key terminal KT can open the front door.

Thus, an inconvenience of a conventional access control method is that control cannot be performed by associating key terminal KT and service terminal ST with each other.

Also, with a conventional access control method, since authentications between individual terminals are independent, it is possible that a security hole may be created, and a device subject to control may be activated even though authentication fails or does not operate properly, causing a problem in regard to safety.

Furthermore, with a conventional access control method, there are no clear rules for a case in which key terminal KT and service terminal ST (a device subject to control) are associated. For example, management responsibility capability for key terminal KT and service terminal ST differs for a child and an adult, but clear rules have not been established for such cases.

Moreover, with a conventional access control method, there are no clear rules for a case in which a plurality of key terminals KT simultaneously access a mobile phone (personal terminal PT).

Also, with a conventional access control method, there are no clear rules for a case in which a plurality of mobile phones (personal terminals PT) access a device subject to control (service terminal ST).

Furthermore, with a conventional access control method, there are no clear rules for a case in which the ID of each terminal has various conditions or attributes, as in a case in which a condition or attribute such as a period of validity or authorization is assigned to the ID of each terminal, for example.

Thus, a problem with a conventional access control method is that flexible access control cannot be performed because access control rules are unclear.

It is an object of the present invention to provide a mobile phone and access control method that enable access control to be performed flexibly by associating terminals with each other by means of a mobile phone inexpensively and safely using existing infrastructure and terminal apparatuses.

### Means for Solving the Problems

A mobile phone of the present invention performs, between a device subject to control for which a function restriction is released by receiving a predetermined code signal and a control terminal that transmits a unique code signal for releasing a function restriction of the device subject to control, access control of the control terminal and the device subject to control, and has: a radio communication section that performs radio communication with the control terminal and the device subject to control; an access table creating section that creates an access table that associates an ID of the control terminal with an ID of the device subject to control; an access table storage section that stores the access table created by the access table creating section; a determining section that, when an ID of the control terminal is input via the radio communication section, determines whether or not an ID of the device subject to control associated with an ID of the control terminal is in the access table; and a control section that, when an ID of the device subject to control associated with an ID of the control terminal is determined by the determining section to be in the access table, controls the radio communication section so as to transmit a held ID to the device subject to control associated with the control terminal.

An access control method of the present invention performs, between a device subject to control for which a function restriction is released by receiving a predetermined code signal and a control terminal that transmits a unique code signal for releasing a function restriction of the device subject to control, access control of the control terminal and the device subject to control by means of a mobile phone, and has: a radio communication step of performing radio communication with the control terminal and the device subject to control; an access table creating step of creating an access table that associates an ID of the control terminal with an ID of the device subject to control; an access table storage step of storing the access table created in the access table creating step; a determining step of, when an ID of the control terminal is input in the radio communication step, determining whether or not an ID of the device subject to control associated with an ID of the control terminal is in the access table; and a control step of, when an ID of the device subject to control associated with an ID of the control terminal is determined to be in the access table in the determining step, controlling the operation of the radio communication step so as to transmit a held ID to the device subject to control associated with the control terminal.

### Advantageous Effect of the Invention

According to the present invention, access control can be performed flexibly by associating terminals with each other by means of a mobile phone inexpensively and safely using existing infrastructure and terminal apparatuses.

### Brief Description of Drawings

FIG.1 is a schematic configuration diagram showing a sample configuration of a communication system in which an access control method according to an embodiment of the present invention is applied;
FIG.2 is a block diagram showing the configuration of a communication system in which an access control method according to an embodiment of the present invention is applied;
FIG.3 is a block diagram showing the configuration of a mobile phone used in an access control method according to an embodiment of the present invention;
FIG.4 is a drawing showing an access table of a mobile phone used in an access control method according to an embodiment of the present invention;
FIG.5 is a drawing showing another access table of a mobile phone used in an access control method according to an embodiment of the present invention;
FIG.6 is an explanatory drawing of a terminal pairing method in an access control method according to an embodiment of the present invention;
FIG. 7 is a sequence diagram showing an access control method according to an embodiment of the present invention;
FIG.8 is an explanatory drawing for explaining a concept of owner authentication by means of a personal wireless device for a conventional device; and
FIG.9 is a conceptual diagram for explaining an access control method of a conventional communication system.

### Best Mode for Carrying Out the Invention

An embodiment of the present invention will now be described in detail with reference to the accompanying drawings. In the drawings, configuration elements and equivalent parts that have identical configurations or functions are assigned the same reference codes, and descriptions thereof are not repeated.

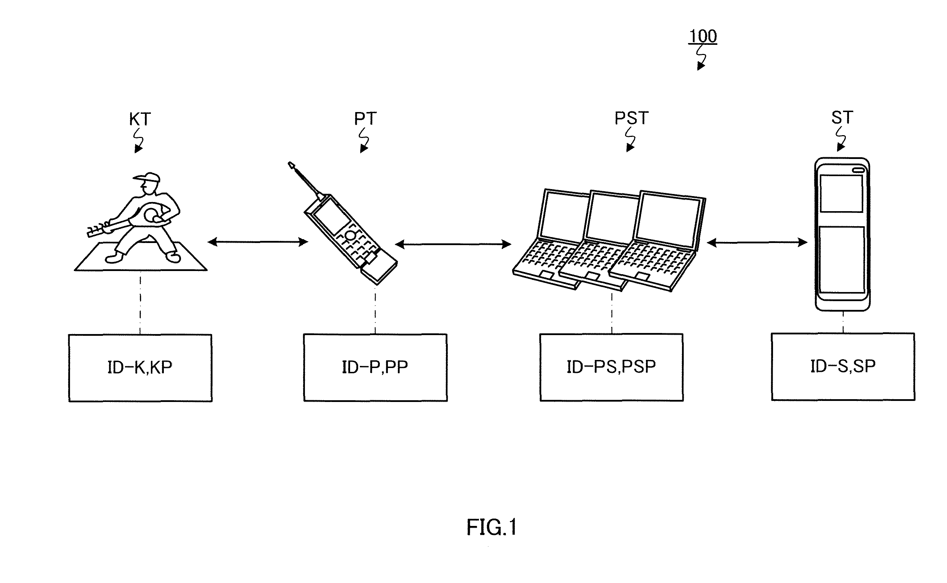

FIG.1 is a schematic configuration diagram showing a sample configuration of a communication system in which an access control method according to an embodiment of the present invention is applied.

As shown in FIG.1, communication system 100 in which an access control method of this example is applied is composed of key terminal KT, personal terminal PT, personal-cum-service terminals PST, service terminal ST, and so forth.

In FIG.1, key terminal KT serving as a control terminal is a key, finger ring, card, or the like, and holds ID-K, which is its authentication ID, and key policy KP.

Personal terminal PT is a mobile phone, and holds ID-P, which is its authentication ID, and personal policy PP.

Personal-cum-service terminal PST is a notebook PC or the like, and holds ID-PS, which is its authentication ID, and personal-cum-service policy PSP.

Service terminal ST serving as a device subject to control is an access point (server) or the like, and holds ID-S, which is its authentication ID, and service policy SP.

Thus, a policy is set in each of key terminal KT, personal terminal PT, personal-cum-service terminal PST, and service terminal ST.

With SPC, in the case of communication system 100 such as described above, key terminal KT constantly transmits ID-K to personal terminal PT.

Personal terminal PT checks whether or not key terminal KT transmitting ID-K is within a fixed distance, whether or not a received ID matches ID-K of a specific key terminal KT registered beforehand, whether or not another condition is satisfied, and so forth.

Then, if an above check condition is satisfied, personal terminal PT sends its own ID-P to service terminal ST.

By this means, a function of service terminal ST is turned on (for example, automobile door locking is released).

Here, with SPC, if an above check condition is satisfied, personal terminal PT constantly transmits its own ID-P to service terminal ST. SPC includes a mechanism such that this kind of ID is not shown directly, but continuously sending an ID to an unrelated terminal as well cannot be said to be desirable from a security standpoint.

Thus, in the access control method of this example, personal terminal PT transmits its own ID-P to service terminal ST only when it receives ID-K transmitted from key terminal KT of a specific person and its function is on.

A person to whom service is scheduled to be provided is registered in service terminal ST beforehand.

Service terminal ST checks ID-P transmitted from personal terminal PT, and provides service.

Personal-cum-service terminal PST is not indispensable one only for performing mediation, and a plurality of stages of Personal-cum-service terminals PST may also be provided.

Also, a plurality of key terminals KT are envisaged - for private use, office use, parents' use, children's use, superiors' use, subordinates' use, and so forth - with minimum service being provided in accordance with key policy KP. Minimum service means information display (a warning or the like), function on/off setting, and so forth.

Key policy KP can set a reception information type and connected personal terminal PT, but since the key terminal KT is often low-functionality, there is no problem with transmitting an ID constantly without being aware of the connection destination. Also, there is no problem if the key policy KP is set at the time of shipment and cannot be changed.

Personal terminal PT provides a subordinate service in accordance with personal policy PP. A subordinate service is an auxiliary service for main service that performs a main service operation, and so forth.

Personal policy PP sets a reception information type, transmission information type, connected key terminal KT, personal-cum-service terminal PST and service terminal ST, release function type, and release conditions (distance, charge, other context, and so forth).

Personal-cum-service terminal PST mediates a main service (references service terminal ST) in accordance with personal-cum-service policy PSP.

Personal-cum-service policy PSP sets a reception information type, transmission information type, connected key terminal KT/personal terminal PT/personal-cum-service terminal PST/service terminal ST, mediation contents, and mediation conditions (distance, other context, and so forth).

Service terminal ST provides a main service in accordance with service policy SP. A main service is an ultimately provided service, being a personally owned apparatus (automobile, home, or the like) or a public apparatus (access point, or the like).

Service policy SP sets a connected key terminal KT and service terminal ST, key terminal KT and service terminal ST attributes, provision contents (function type, period, and so forth), provision object (range, quantity, priority, and so forth), and provision conditions (charge, payment method, other context, and so forth).

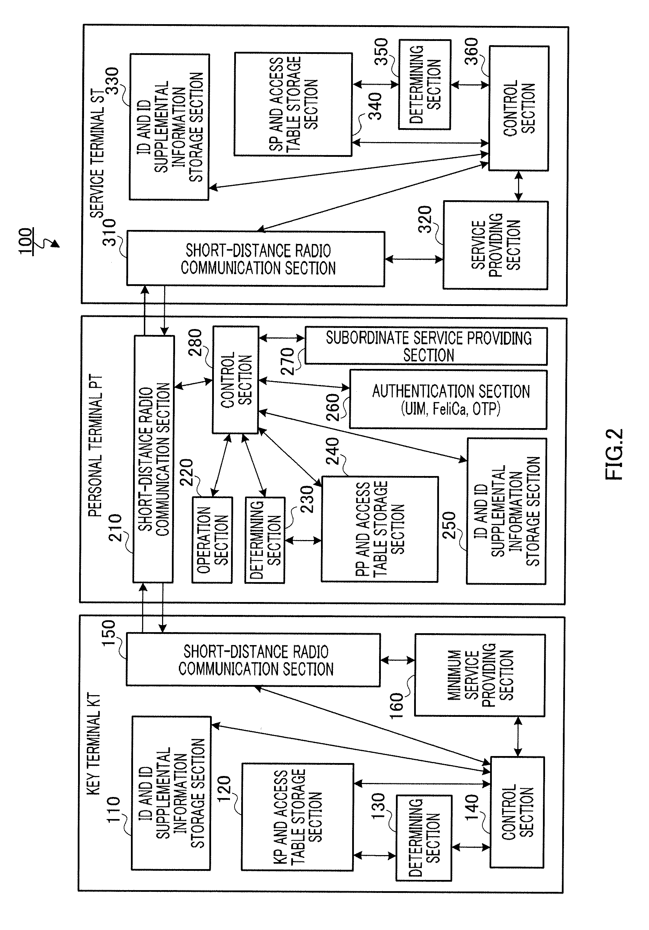

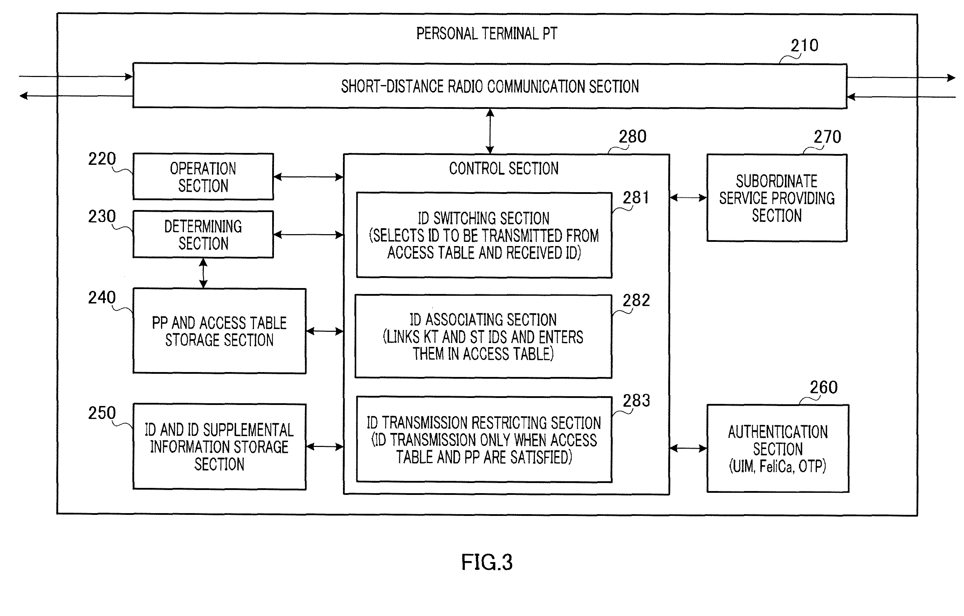

Next, the configuration of communication system 100 in which an access control method of this example is applied will be described. FIG.2 is a block diagram showing the configuration of a communication system in which an access control method according to an embodiment of the present invention is applied, and FIG.3 is a block diagram showing the configuration of a mobile phone used in an access control method according to an embodiment of the present invention.

As shown in FIG.2, communication system 100 in which an access control method of this example is applied is composed of key terminal KT, personal terminal PT, and service terminal ST.

In FIG.2, key terminal KT is equipped with ID and ID supplemental information storage section 110, KP and access table storage section 120, determining section 130, control section 140, short-distance radio communication section 150, and minimum service providing section 160.

Personal terminal PT is equipped with short-distance radio communication section 210, operation section 220, determining section 230, PP and access table storage section 240, ID and ID supplemental information storage section 250, authentication section 260, subordinate service providing section 270, and control section 280.

Service terminal ST is equipped with short-distance radio communication section 310, service providing section 320, ID and ID supplemental information storage section 330, SP and access table storage section 340, determining section 350, and control section 360.

Also, as shown in FIG.3, control section 280 of personal terminal PT is equipped with ID switching section 281, ID associating section 282, and ID transmission restricting section 283, as elements differing from conventional PSC.

Communication system 100 in which an access control method of this example is applied may also be equipped with personal-cum-service terminals PST as shown in FIG.1. Like personal terminal PT, such a personal-cum-service terminal PST is equipped with short-distance radio communication section 210, operation section 220, determining section 230, ID and ID supplemental information storage section 250, authentication section 260, and control section 280. Also, personal-cum-service terminal PST is equipped with a "service mediation section" instead of subordinate service providing section 270 of personal terminal PT, and a "PSP and access table storage section" instead of PP and access table storage section 240 of personal terminal PT.

In FIG.2, key terminal KT and service terminal ST are the same as in the case of SPC.

Communication system 100 differs from an SPC communication system in that a mobile phone serving as personal terminal PT is equipped with PP and access table storage section 240 and ID and ID supplemental information storage section 250, and control section 280 is equipped with ID switching section 281, ID associating section 282, and ID transmission restricting section 283.

That is to say, with conventional SPC, many ID-Ks are transmitted from access counterpart key terminal KT to service terminal ST, but key terminal KT and service terminal ST are not separated and their mutual relationship is not clear.

WithconventionalSPC, keyterminalKTconstantly transmits ID-K, and service terminal ST that receives ID-K from key terminal KT has all its functions made valid.

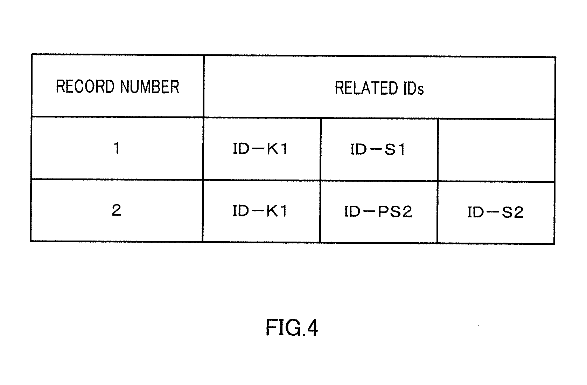

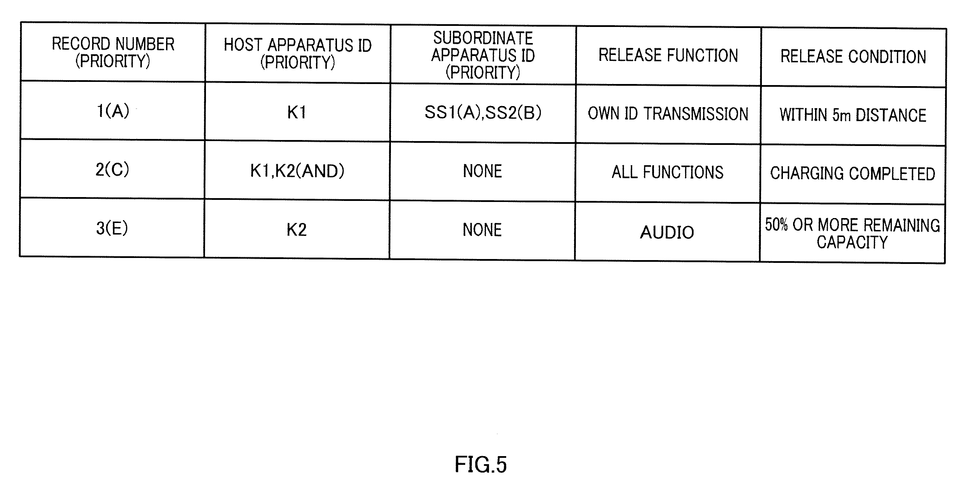

In contrast, with the access control method of this example, an access table (see FIG.4 and FIG.5) in which the relationship between personal terminal PT (a mobile phone), and key terminal KT and service terminal ST, is written is stored in PP and access table storage section 240 of personal terminal PT.

Also, in the access control method of this example, control is performed so that personal terminal PT (a mobile phone) transfers a necessary ID-P to service terminal ST when a preset condition is satisfied.

Furthermore, in the access control method of this example, control is performed so that, for ID-P transferred to service terminal ST, also, personal terminal PT (a mobile phone) transfers an ID with a period of validity or an ID for attribute information alone that does not identify an individual, only when necessary.

Here, when an individual is identified, it is fundamentally necessary to newly provide authentication infrastructure for identifying an individual, but newly providing such authentication infrastructure increases the cost of a system.

Thus, in the access control method of this example, control is performed so that an ID stored in a UIM (User Identity Module) incorporated beforehand in a mobile phone serving as personal terminal PT, an ID stored in a FeliCa (registered trademark), or the like, is assigned as authentication infrastructure.

Thus, with the access control method of this example, service quality has been improved by changing the method of control.

That is to say, in the access control method of this example, an ID that is transferred to a communicating party is switched by ID switching section 281 of control section 280 of personal terminal PT. Specifically, an ID that is transmitted is selected from an access table stored in PP and access table storage section 240 and a received ID, and an ID that is transferred to a communicating party is switched.

Also, with the access control method of this example, a received ID is associated (paired) with a transmission counterpart by ID associating section 282 of control section 280 of personal terminal PT. Specifically, ID-K of key terminal KT and ID-S of service terminal ST are linked and entered in an access table stored in PP and access table storage section 240.

With an access control method such as described above, if the same ID continues to be used, there is a risk of the ID being traced and decrypted by a third party.

Thus, in the access control method of this example, a mechanism may be introduced to prevent a third party from easily acquiring an ID, such as by changing an ID each time using a one-time password system, or encrypting an ID by means of a stochastic code and transmitting it as different encrypted text each time.

In the access control method of this example, electronic money may be utilized by means of a noncontact IC such as FeliCa (registered trademark) for charging a user for use of service terminal ST.

Also, in the access control method of this example, charging a user for use of service terminal ST may be implemented by having service terminal ST charge an ID-P account via a backbone.

Also, in the access control method of this example, a noncontact IC electronic money backbone infrastructure provider or mobile phone operator charging system may be utilized for charging a user for use of service terminal ST.

Also, in the access control method of this example, provision may be made for key terminal KT and service terminal ST to perform charging processing by means of electronic money directly.

Also, in the access control method of this example, control may be performed so that, when service terminal ST provides public wireless LAN spot service, use of a wireless LAN becomes possible within range of a predetermined access point after electronic money payment by means of a noncontact IC or the like by service terminal ST and key terminal KT.

As described above, in the access control method of this example, key terminal KT and service terminal ST, which is a device subject to control, are associated with each other by means of a mobile phone, which is personal terminal PT.

In the access control method of this example, an ID or confidential information of a User Identity Module, which is existing authentication infrastructure, is associated with ID-P of personal terminal PT in a mobile phone serving as personal terminal PT.

Personal terminal PT (a mobile phone) in the access control method of this example communicates with key terminal KT and service terminal ST (a device subject to control), stores an access table containing a relationship thereof in PP and access table storage section 240, and on receiving ID-K of key terminal KT entered in the access table, transmits its own ID-P to service terminal ST.

In the access control method of this example, a plurality of apparatuses for which connection is possible, a release function and release condition, and an ID and record priority may be set in the access table stored in PP and access table storage section 240, as shown in FIG.5, and attribute information and a period of validity may be defined for an ID.

In SPC technology, it is necessary to newly install a pairing apparatus that performs ID registration for each terminal in order to associate the IDs of terminals that communicate with each other.

In the access control method of this example, a pairing apparatus is not newly installed, and a mobile phone that is personal terminal PT is used as a pairing apparatus.

ID registration by directly connecting terminals by means of a serial cable, USB cable, or the like, can be conceived of as an actual pairing method, but carrying such a cable around for pairing is impractical.

Therefore, the use of a short-distance radio technology such as NFC (Near Field Communication) or Bluetooth is desirable as this pairing method. However, with Bluetooth, a pairing counterpart is difficult to identify since the communication distance is long. On the other hand, NFC has a short communication distance, and can therefore be said to be an effective means of communication from the standpoint of ease of identifying a pairing counterpart.

A UIM (User Identity Module) or suchlike IC card, or a memory card, can be used for this pairing (associated registration of IDs). In practical terms, the use of a memory card is more efficient since inserting and removing a UIM is laborious.

If a noncontact IC is used for pairing, a service terminal ST RW (reader/writer) writes service policy SP and ID-S to a noncontact IC of personal terminal PT, and reads personal policy PP and ID-P stored in the noncontact IC beforehand.

If NFC is used for pairing, a service terminal ST RW writes service policy SP and ID-S to personal terminal PT, and a personal terminal PT RW writes personal policy PP and ID-P to service terminal ST (either may be performed first). Thus, when NFC is used for pairing, it is assumed that there is also an RW function on the mobile phone (i.e. personal terminal PT) side.

In the access control method of this example, registration of each terminal' s ID and policy is permitted only after authentication via a noncontact IC. When a noncontact IC is used for pairing in this way, combined use with charging by means of electronic money is effective.

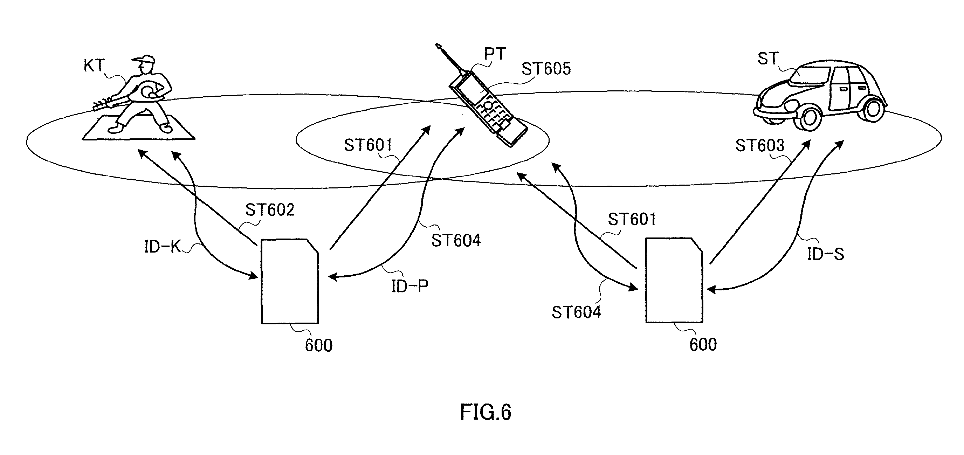

Next, the procedure of a pairing method using a memory card will be described. Here, a description will be given of a procedure for associating a wearable key unit (key terminal KT) with an automobile (service terminal ST) that is a device subject to control, centered on a mobile phone (personal terminal PT), as shown in FIG.6.

In FIG.6, first, in step ST601, memory card 600 is inserted into personal terminal PT, and memory card 600 is registered in personal terminal PT. For example, in step ST601, CID, which is the ID of memory card 600, is set in personal terminal PT (or ID-P of personal terminal PT is recorded in the memory card).

Next, in step ST602, memory card 600 is inserted into key terminal KT, and memory card 600 is registered in key terminal KT.

A case can be envisaged in which there is no memory card 600 slot in key terminal KT. In this case, it is assumed that setting is completed when the product is purchased. Alternatively, setting may be performed by means of radio used by SPC. As another alternative, input may be performed directly by means of key input from personal terminal PT.

Also, in step ST602, ID-K of key terminal KT is recorded in memory card 600. Here, if key terminal KT has memory, the ID of memory card 600 (CID) or ID-P of personal terminal PT is set in key terminal KT in the memory of key terminal KT.

Next, in step ST603, memory card 600 is inserted into service terminal ST, and memory card 600 is registered in service terminal ST. Service terminal ST reads and stores CID (or ID-P) from memory card 600. A method whereby ID-K is registered directly is also possible. Also, in step ST603, ID-S of service terminal ST is recorded in memory card 600.

Next, in step ST604, memory card 600 in which ID-K of key terminal KT and ID-S of service terminal ST have been recorded is inserted into personal terminal PT, and an ID is read from memory card 600. Then ID-K of key terminal KT and ID-S of service terminal ST are set in personal terminal PT.

Next, in step ST605, personal terminal PT records ID-K of key terminal KT and ID-S of service terminal ST in an access table, associated with CID of memory card 600 (or ID-P of personal terminal PT).

Then personal terminal PT performs access control using the access table in which the IDs of the terminals are associated. That is to say, personal terminal PT receives ID-K of key terminal KT and transmits ID-P of personal terminal PT to service terminal ST. Also, personal terminal PT receives ID-S of service terminal ST and transmits ID-P of personal terminal PT to key terminal KT.

Here, if ID-K permitted by personal policy PP is at a distance permitted by personal policy PP and also satisfies another condition required by personal policy PP, a function of personal terminal PT specified by personal policy PP is on, and ID-S of service terminal ST can be received, personal terminal PT transmits ID-P to only service terminal ST permitted by personal policy PP.

Another condition required by personal policy PP refers, for example, to a check of a context other than distance, conflict resolution when a plurality of key terminals KT are detected, or the like.

Also, if ID-P permitted by service policy SP is at a distance permitted by service policy SP and also satisfies another condition required by service policy SP, a function of service terminal ST specified by service policy SP is on, and it is possible for personal terminal PT to be able to detect a service, service terminal ST transmits ID-S of service terminal ST.

Another condition required by service policy SP refers, for example, to conflict resolution when a plurality of personal terminals PT are detected, charging processing, or the like.

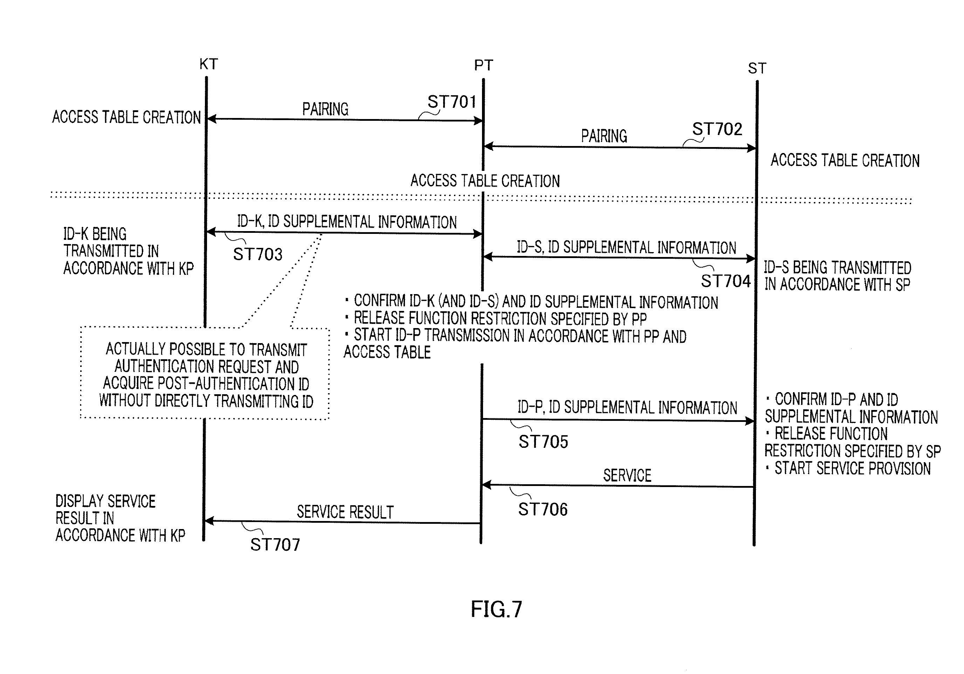

Next, the access control method of this example will be described. FIG.7 is a sequence diagram showing an access control method according to an embodiment of the present invention.

In FIG.7, processing that creates the kind of access table shown in FIG.4 and FIG.5 is performed in the upper stage, and access control using the access table created in the upper stage is executed in the lower stage.

That is to say, as upper stage operations in FIG. 7, pairing of key terminal KT and personal terminal PT (step ST701), and pairing of personal terminal PT and service terminal ST (step ST702), is performed by means of the above-described pairing method.

With the access control method of this example, basically, an access table is created on the mobile phone (personal terminal PT) side that is a personal terminal PT. Here, a key terminal KT side access table is a low-functionality table that only issues a signal. Also, a service terminal ST side access table performs a setting as to who is to be provided with a service.

A mobile phone (personal terminal PT) side access table is a table that includes a relationship and control of key terminal KT and service terminal ST.

Next, as a lower stage operation in FIG.7, following access table creation, key terminal KT transmits ID-K and ID supplemental information to personal terminal PT in accordance with key policy KP (step ST703).

On the other hand, service terminal ST transmits ID-S and ID supplemental information to personal terminal PT (step ST704).

If there is a service matching received ID-K of key terminal KT, personal terminal PT transmits ID-P and ID supplemental information to service terminal ST (step ST705). If there is no service, personal terminal PT functions as a normal mobile phone.

Service terminal ST confirms ID-P and ID supplemental information transmitted from personal terminal PT, releases a function restriction specified by service policy SP, and starts service provision.

By this means, a service is transmitted from service terminal ST to personal terminal PT (step ST706), and a service result is transmitted from personal terminal PT to key terminal KT (step ST707). Then key terminal KT that has received a service result from personal terminal PT displays the service result in accordance with key policy KP.

Thus, in the access control method of this example, personal terminal PT (a mobile phone) transmits ID-P of personal terminal PT to service terminal ST if there is a previously registered necessary service only when ID-K of key terminal KT arrives.

Also, personal terminal PT (a mobile phone) does not transmit ID-P of personal terminal PT to service terminal ST if a condition is not met and there is no matching even if there is a previously registered necessary service.

As described above, in the access control method of this example, existing authentication infrastructure - for example, a UIM, FeliCa (registered trademark), or one-time pad (OTP) - is utilized as authentication infrastructure, and a mobile phone (personal terminal PT) is utilized as a pairing apparatus. Consequently, the access control method of this example does not require authentication infrastructure or a pairing apparatus to be newly installed.

Also, in the access control method of this example, two authentications-between key terminal KT and personal terminal PT (a mobile phone), and between personal terminal PT (a mobile phone) and an automobile (service terminal ST) that is a device subject to control - are associated. Furthermore, in the access control method of this example, key terminal KT, personal terminal PT (a mobile phone), and an automobile (service terminal ST) that is a device subject to control, are also associated with existing authentication infrastructure. Consequently, in the access control method of this example, there is no longer a possibility of authentications between terminals being independent and a security hole arising, as in the case of conventional SPC.

Also, in the access control method of this example, flexible access control items are set, and the problem of the weakness of the access control method of conventional SPC has been resolved.

That is to say, heretofore, an arrangement has been centered on a mobile phone that is personal terminal PT, and an ID of a person for which a mobile phone call is possible is recorded. Also, a wearable key unit, front door, automobile, and so forth, have been checked in parallel in a mobile phone table.

Thus, with the access control method of this example, a mobile phone is made to resemble a pairing apparatus, and a wearable key unit and a front door or automobile ID are respectively paired and stored as a set. That is to say, provision has been made to implement association between previously parallel wearable key unit and front door and automobile IDs.

Also, with the access control method of this example, a configuration is employed whereby a mobile phone is provided with an access table in which a wearable key unit and front door or automobile ID are recorded as a set.

Thus, with the access control method of this example, a mobile phone, on receiving ID-K entered in the access table from a wearable key unit (key terminal KT), checks whether or not there is a front door or automobile ID-S forming a pair with the wearable key unit.

Then, if there is a front door or automobile ID-S forming a pair with the wearable key unit, the mobile phone transmits its own ID-P to the paired front door or automobile.

Consequently, with the access control method of this example, authentications of devices subject to control previously performed in a disparate manner can be linked together by a mobile phone.

Thus, with the access control method of this example, personal terminal PT performs key terminal KT, personal-cum-service terminal PST, and service terminal ST association (pairing).

Also, personal terminal PT communicates with key terminal KT, personal-cum-service terminal PST, and service terminal ST, and stores the respective relationships in an access table.

Then, on receiving ID-K entered in the access table, personal terminal PT transmits its own ID-P.

Here, if transmission destinations are restricted, personal terminal PT transmits its own ID-P only when a transmission destination ID-P or ID-S is received.

By this means, personal terminal PT can restrict unnecessary ID-P transmissions, and can achieve improved safety and lower power consumption.

Some mobile phones contain UIM or FeliCa (registered trademark) existing authentication infrastructure.

Thus, with communication system 100 of this example in which such a mobile phone is used as personal terminal PT, personal terminal PT transmits ID-P when ID-K arrives from key terminal KT, but a secret key such as a UIM ID or a FeliCa (registered trademark) IDm is utilized as an ID transmitted at this time. A secret key cannot be transmitted as it is, and therefore challenge/response specifications undergo STP (ID-S) conversion to service provider specifications.

Also, a one-time pad token of a one-time pad (OTP) used as a bank fishing countermeasure may be used as an ID transmitted by personal terminal PT. With a one-time pad token, a server performs synchronized changing of a numeric or suchlike password automatically on a time or number-of-times-used basis.

Also, with the access control method of this example, software for token operation may be pre-installed in a mobile phone. This makes a separate token unnecessary, and enables an ID issued by a token to be transmitted by the mobile phone and used as ID-P of personal terminal PT.

Thus, with the access control method of this example, personal terminal PT associates an existing authentication infrastructure ID or confidential information with ID-P, and uses an existing authentication infrastructure ID or confidential information as a secret key corresponding to ID-P used in authentication, between personal terminal PT and personal-cum-service terminal PST, and between personal terminal PT and service terminal ST, respectively.

Here, only an existing authentication infrastructure ID is transmitted in the case of simple authentication, while authentication is performed cryptically with an existing authentication infrastructure secret key in the case of rigorous authentication.

Specifically, UIM-ID of a UIM, a telephone number, a secret key in a UIM, or the like, is used as existing authentication infrastructure. Alternatively, a FeliCa (registered trademark) ID, a secret key in a FeliCa, or the like, is used as existing authentication infrastructure. Also, a one-time pad (OTP) user ID, password, or the like, may be used as existing authentication infrastructure.

Key terminal KT may also double as a token. For example, time-varying OTPi obtained from key terminal KT may be used as a secret key.

Also, service terminal ST and key terminal KT may be provided with soft token. That is to say, OTPi from software may be used as a secret key.

With the access control method of this example, a terminal for which connection is permitted is registered beforehand in a mobile phone table. Key terminal KT as a host device, and service terminal ST as a subordinate device, set what is permitted.

Also, with the access control method of this example, what kind of behavior is permitted is set in a mobile phone table. For example, with a FeliCa (registered trademark) fee-based service, a setting is made so that an ID is transmitted after 500 yen has been charged.

In radio communication, record signals from a plurality of key terminals KT are transmitted simultaneously. Thus, with the access control method of this example, which record signal is to be given priority for processing is set in a mobile phone table. For example, a setting is made in the table indicating which ID-K is to be received with priority when a plurality of ID-Ks for a house front door key, automobile key, or the like, are received, or indicating that an ID-K transmitted by an adult is to be received with priority when ID-Ks are transmitted simultaneously by a child and an adult.

In the access control method of this example, provision may also be made for personal-cum-service terminal PST to set a service mediation condition. For example, provision may be made for the mediated contents, distance, and counterparty to be restricted.

With the access control method of this example, provision may also be made for a connectable number of apparatuses to be set in personal terminal PT and service terminal ST access tables. It is assumed that AND, OR, NOR, and suchlike settings would also be possible.

With the access control method of this example, provision may also be made for a release function and release condition to be set in key terminal KT, personal terminal PT, and service terminal ST access tables. It is assumed that AND, OR, NOR, and suchlike settings would also be possible. Release conditions include location time, remaining battery capacity, a motion sensor, a charging completion flag, and so forth.

With the access control method of this example, provision may also be made for an ID and record priority to be set in personal terminal PT and service terminal ST access tables. It is assumed that such a setting would also be possible simultaneously and at the time of interrupt access.

With the access control method of this example, provision may also be made for an ID to be given two kinds of characteristics -an attribute and a period of validity.

With SPC, individual identification is performed by means of an ID. However, there are many cases in which adequate owner authentication is possible if an attribute of an organization to which a person belongs or the like is known, even if an actual individual is not identified, as in the case of a company, for example. Further, a service requires only an attribute such as a charge for one-month.

Thus, with the access control method of this example, giving an ID two kinds of characteristics - an attribute and a period of validity - enables usage time to be assigned or a used function to be restricted according to the kind of attribute. In addition, an attribute may also be added to an individual ID in communication system 100 of this example (or an attribute alone may be used).

With the access control method of this example, an attribute and period of validity are defined for an ID (these being called ID supplemental information). By defining an attribute for an ID in this way, function provision can be implemented according to an attribute of an employee, organization, position, or the like, without identifying an individual.

By this means, attribute-based control such as time-sharing (assignment of usage time in line with an attribute), exclusive control (prioritization or forced interruption according to an attribute), usable function control (determination of a usable function in line with an attribute), and so forth, becomes possible in the access control method of this example.

Also, with the access control method of this example, defining a period of validity for an ID (specifying a period of validity of an ID) enables an ID that is valid for only one day to be issued as a fee-based service. Here, defining ID supplemental information is assumed to entail adding information to an individual ID or separately holding an attribute ID. It is assumed that it is possible to specify behavior for an unauthorized ID. If an unauthorized ID is detected, a warning is issued (for example: collision prevention).

Thus, the access control method of this example enables owner authentication to be implemented at low cost by using existing infrastructure and existing apparatuses. That is to say, with the access control method of this example, an ID of conventional existing infrastructure can be used as a switched ID, and the kind of provisions required in the case of SPC infrastructure are not necessary, enabling communication system 100 to be configured inexpensively.

Furthermore, since the access control method of this example associates individual authentications by means of a mobile phone, individual information need only be transferred when necessary by switching ID according to service, improving safety.

Also, since the access control method of this example provides access table and ID expansion, various access control conditions can be set, and a variety of services are made possible.

Moreover, since the access control method of this example associates key terminal KT with service terminal ST by means of personal terminal PT, it is not necessary to transmit an ID constantly, enabling power to be saved and safety to be improved. That is to say, with SPC a code signal is continuously issued at all times, whereas with the access control method of this example a required ID is issued only when necessary. Also, with the access control method of this example, whether or not an ID is issued is decided according to circumstances, and an issued ID is also switched according to the counterparty.

### Industrial Applicability

An access control method according to the present invention enables access control to be performed flexibly by associating terminals with each other by means of a mobile phone inexpensively and safely using existing infrastructure and terminal apparatuses, and is therefore suitable for use as an access control method and in a portable terminal apparatus of a communication system that performs owner authentication for a device by means of a personal wireless device.

## Claims

1. A mobile phone that performs, between a device subject to control for which a function restriction is released by receiving a predetermined code signal and a control terminal that transmits a unique code signal for releasing a function restriction of the device subject to control, access control of the control terminal and the device subject to control, the mobile phone having:
a radio communication section that performs radio communication with the control terminal and the device subject to control;
an access table creating section that creates an access table that associates an ID of the control terminal with an ID of the device subject to control;
an access table storage section that stores the access table created by the access table creating section;
a determining section that, when an ID of the control terminal is input via the radio communication section, determines whether or not an ID of the device subject to control associated with an ID of the control terminal is in the access table; and
a control section that, when an ID of the device subject to control associated with an ID of the control terminal is determined by the determining section to be in the access table, controls the radio communication section so as to transmit a held ID to the device subject to control associated with the control terminal.

2. The mobile phone according to claim 1, wherein the held ID is an ID that identifies a mobile phone.

3. The mobile phone according to claim 1, wherein an ID identifying a mobile phone is sent as the held ID when an own ID is transmitted only when a mobile phone receives an ID of a device subject to control stored in an access table associated with an ID of a control device.

4. The mobile phone according to claim 1, wherein the held ID is an ID that identifies an IC card held by a mobile phone or an ID stored in an IC chip.

5. The mobile phone according to claim 1, wherein a connectable number of devices subject to control, a release function of the device subject to control, a release condition of the release function, an ID and record priority, are set, and attribute information and a period of validity of the ID are defined, in the access table.

6. An access control method that performs, between a device subject to control for which a function restriction is released by receiving a predetermined code signal and a control terminal that transmits a unique code signal for releasing a function restriction of the device subject to control, access control of the control terminal and the device subject to control by means of a mobile phone, the access control method having:
a radio communication step of performing radio communication with the control terminal and the device subject to control;
an access table creating step of creating an access table that associates an ID of the control terminal with an ID of the device subject to control;
an access table storage step of storing the access table created in the access table creating step;
a determining step of, when an ID of the control terminal is input in the radio communication step, determining whether or not an ID of the device subject to control associated with an ID of the control terminal is in the access table; and
a control step of, when an ID of the device subject to control associated with an ID of the control terminal is determined to be in the access table in the determining step, controlling operation of the radio communication step so as to transmit a held ID to the device subject to control associated with the control terminal.
